# EUROPEAN PATENT SPECIFICATION

(11) **EP 1 072 833 B1**
(45) Date of publication and mention of the grant of the patent: **13.10.2004**
(21) Application number: 99830479.4
(22) Date of filing: 26.07.1999
(51) Int. Cl.: F16K 47/02

(54) **Hot and cold water mixing valve with shock absorber**
Warm- und Kaltwasser- Mischventil mit Stossdämpfer
Robinet mitigeur d'eau chaude et froide avec amortisseur

(43) Date of publication of application: 31.01.2001
(73) Proprietor: GAC Plumbing Products Inc., Largo, Florida 33777 (US)
(72) Inventor: Orlandi, Roberto, 6918 Figino (CH); Orlandi, Alessio, 46043 Castiglione D. Stiviere,(Mantova) (IT)
(74) Representative: Sangiacomo, Fulvia

(56) References cited:
- EP-A- 0 143 058
- EP-A- 0 647 807
- WO-A-88/03240
- DE-A- 3 902 246
- PATENT ABSTRACTS OF JAPAN vol. 1998, no. 05, 30 April 1998 (1998-04-30) & JP 10 019144 A (KITAMURA GOKIN SEISAKUSHO:KK), 23 January 1998 (1998-01-23)

## Description

The present invention regards the sector of hot and cold water mixing valves with a cartridge body and with valve elements consisting of plates made of ceramic or the like. More specifically, it pertains to a mixing valve with a lock or shock absorber for a gentler control as well as to regulate the valve means and to prevent the so-called water hammerings when closing the water passages.

Hot and cold water mixing valves with a closing lock or shock absorber which consists of movable opposite pistons in corresponding chambers that are opposed by a fluid have already been proposed. In a prior-art embodiment, the action of the pistons is controlled by an inflow of water to their chambers through inlet and outlet passages. However, the water passages can become blocked due to inevitable deposits of limestone and/or due to the presence of foreign particles carried by the water. In that case, the blocking of the holes limits the action of the lock and may directly prevent the closing of the valve. Moreover, the mechanism of control in these valves results in a water bath and requires the use of special parts that contribute to complicating the construction of the valves, making them less economical.

In another embodiment, the locking or shock-absorbing elements for these mixing valves are oil type, but still have the drawback of requiring special parts for their operation.

An example of an hot and cold mixing valve is described in DE-3 902 246-A1.

The main object of the present invention is to remedy these drawbacks and disadvantages of the prior art and correspondingly to propose a mixing valve with a closing lock or shock absorber
- free from disturbances [sic, typo in original - Tr.Ed.] due to the presence of water, limestone and foreign bodies as it operates with oil;
- manufacturable with standard parts and thus more easily and at lower costs;
- capable of making it possible to reduce the dimensions of the valve and, anyway, to contain these dimensions within those of the smallest cartridge mixing valves.

This object is accomplished with a mixing valve which incorporates a closing lock or shock absorber according to claim 1.

Essentially therefore the chambers and the locking pistons are arranged in a pulling disk that engages, on the one hand, with the movable plate of the valve unit, and on the other hand, with the control lever of the valve, and as such, are contained in an element and in a space provided, per se, in each mixing valve.

Greater details of the present invention shall become more evident from the description that is given below with reference to the attached indicative and nonlimiting drawings, in which:
Figures 1 and 2 show sectional views of the assembly of a mixing valve according to the present invention in the opening and closing positions, respectively;
Figure 3 shows a sectional view of the only pulling disk;
Figure 4 shows a lateral view of the pulling disk according to arrow A of Figure 3; and
Figure 5 shows one of the locking pistons in its possible configuration.

The general structure of the mixing valve is traditional. In fact it comprises a cartridge body 11, in which are provided valve means for controlling the opening and closing of the valve, as well as the course and temperature of the mixed water distributed. The valve means are formed by two overlapping plates, which are made of ceramic or another suitable material, a fixed lower plate 12 and a movable upper plate 13, which can be moved on the fixed one, the said plates delimiting the passages for the inlet of hot and cold water and the outlet of mixed water. For their movements, a pulling disk 14, engaged by a control lever 15 provided with a pressing handle (not shown), is fit flush on the movable plate 13. In its turn, the control lever 15 oscillates on a cross pin 16, which is carried by a support bushing 17, which is mounted and rotates in the cartridge body 11, in such a way that oscillations of the lever correspond to the opening and closing of the valve and which, with rotatins of the lever, correspond to variations in the courses of the mixed hot and cold water.

According to the present invention, two radial chambers 18,19, diametrically opposed by two locking pistons 20, 21, respectively, complete with seals 20', 21', are provided in the pulling disk 14. The chambers are arranged in a plane at right angles to the axis of oscillation of the control lever 15 in such a way that a piston 20 is oriented in the direction of the opening movement and the other in the direction of the closing movement, by means of this lever, of the pulling disk 14 with the movable plate 13 on the fixed one 12. Moreover, the said chambers 18, 19 both communicate with an intermediate channel or reservoir 22 that is filled with an oil 22' acting as the fluid vehicle for the movement in unison of the two pistons following the oscillatory movements of the control lever 15.

The pistons 20, 21 are turned towards the outside of the pulling disk 14 and rest against the internal surface of the body without blocking the rotation of the disk proper, with the movable plate deriving from the rotation of the lever together with the support bushing.

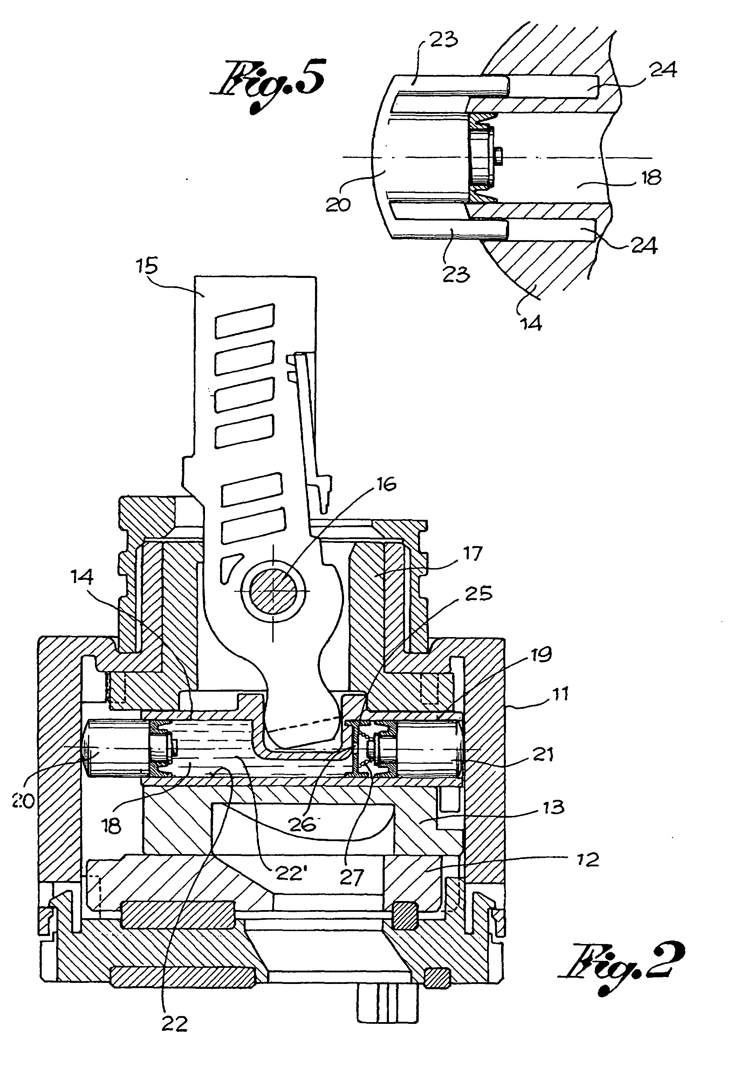

In cross section, the chambers 18,19 may have a circular, elliptical (as shown in Figure 4), polygonal, etc. shape, and the pistons 20, 21 that are accommodated there will have a corresponding shape.

Each of the pistons 20, 21 may also be provided, though not necessarily, with one or more, preferably with two lateral guide arms 23, which are inserted and slide in guide cavities 24 made in the pulling disk 14 on the sides of the chambers 18, 19, in parallel to their axis.

Finally, a floating disk 25 having at least one constricting hole 26 for calibrating the flow of return oil from the chamber proper to the intermediate channel or reservoir 22 is inserted into the chamber 19 of the locking piston 21, which is arranged in the direction of the closing movement of the movable plate 13 on the fixed one 12. The disk is arranged behind the piston 21 with the interposition of a spring 27 tending in one direction to constrict, shock-absorbing it, the re-entry of said piston in the respective chamber and to push it gently outwards, assisting the pushing of the oil in the opposite direction.

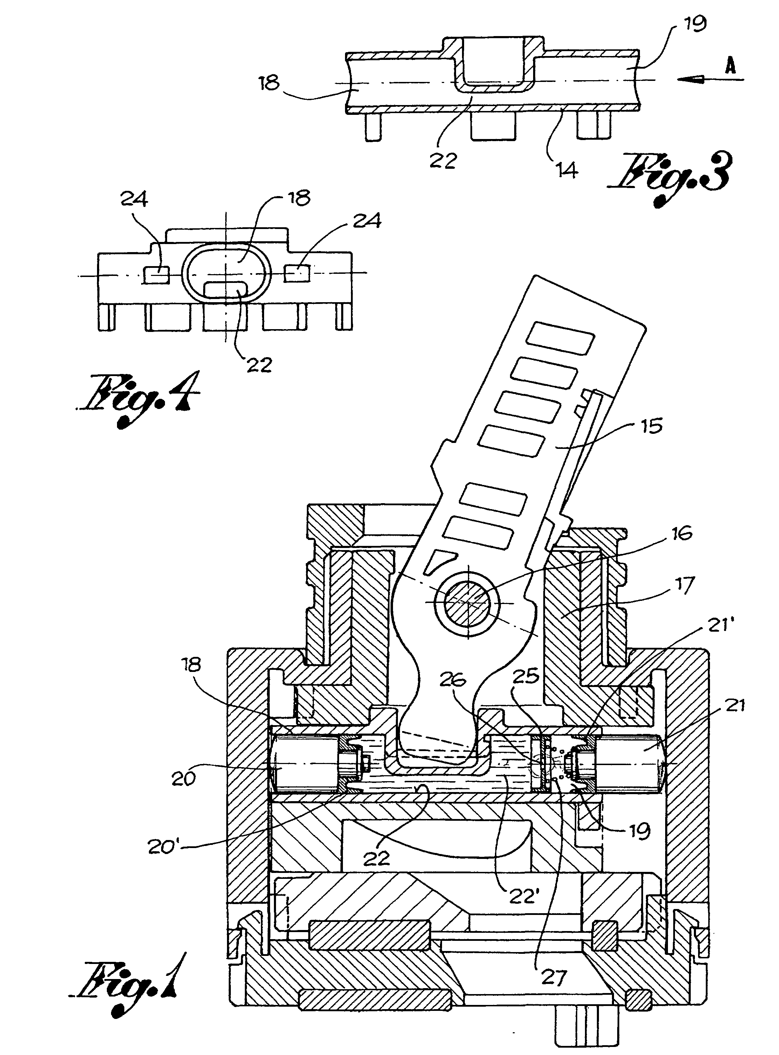

In practice, when the control lever 15 is moved in the opening position of the valve for the distribution of water through the valve means 12, 13, the pulling disk 14 is moved with the movable plate 13, on the one hand, to the left as shown in Figure 1. In this opening position, the piston 20 must re-enter the respective chamber 18 and, by means of the fluid vehicle 22', pushes the opposite piston 21 outwards, which is kept resting against the internal surface of the body 11.

Upon the subsequent closing the valve, the control lever is moved in the opposite direction as shown in Figure 2, thus moving the pulling disk 14 and with it the movable plate 13 in the direction opposite the previous one, i.e., to the right. The, the piston must re-enter the respective chamber 19, while the other piston 20 protrudes from its chamber. However, the passage of the fluid from the chamber 19 of the re-entering piston 21 to the intermediate reservoir 22 is constricted and slowed down by the constricting hole 26 in the disk 25, and therefore, the return of the plate into the closing position is "locked" to achieve the above-mentioned function.

## Claims

1. Hot and cold water mixing valve comprising a body (11), which contains a valve unit consisting of two overlapping sealing plates (12, 13), one fixed and the other movable on the fixed one by means of a control lever (15), which is pivoted on a oscillation cross pin (16) and is capable of rotating on a support bushing (17) mounted rotatably in the body, in which said fixed and movable plates have inlet and outlet water passages and in which the movable plate (13) is moved into the opening and closing positions by said control lever by means of a pulling disk (14) which is fit flush on the movable plate proper, means (20-21) for locking the closing movements of the movable plate by means of said control lever (15), which are mounted in the pulling disk (14) in a plane at right angles to the oscillation movements of the lever on the respective cross pin, **characterized by** the fact that in the pulling disk (14) are provided two radial chambers (18,19), diametrically opposed by two locking pistons (20,21), slidably sealed in said chambers, said chambers both communicating with an intermediate channel or reservoir (22) that is filled with a fluid vehicle, from the opening position to the closing position of the valve said fluid passing from one chamber (19) of the disk to the other one. (18).

2. Hot and cold water mixing valve according to claim 1, in which said fluid vehicle is oil.

3. Hot and cold water mixing valve according to claim 1, in which said pistons (20,21) are provided with seals (20',21').

4. Hot and cold water mixing valve according to claim 1, in which a floating disk (25) having at least one constricting hole (26) is inserted into the chamber (19)said chamber being arranged in the direction of the closing movement of the movable plate (13).

5. Hot and cold water mixing valve in accordance with claim 1, in which said two corresponding pistons (20, 21), provided with seals (20', 21') and both resting constantly against the internal surface of the body, are accommodated in the chambers, in which a piston re-enters its own chamber when the other protrudes from its chamber depending on the opening and closing movements of the said movable plate (13) on the fixed one (12), and in which constricting means for constricting the flow of oil from the said chamber to the said reservoir for locking the closing movement of the plate by means of the control lever is provided in the chamber (19) of the piston (21) in the direction in which the movable plate (13) is moved for closing.

6. Hot and cold water mixing valve in accordance with claim 5, in which said constricting means consists of a hole (26) provided in a floating disk (25) arranged in the chamber (19) behind the piston (21) and associated with the same with the interposition of a compressible spring (27).

7. Hot and cold water mixing valve in accordance with claim 5, in which each of said piston (20, 21) has two lateral guide arms (23), which extend and slide in guide cavities (24) provided on the sides of said chambers (18,19).

## Patentansprüche

1. Warm- und Kaltwasser-Mischventil, einschließlich Ventilkörper (11), der eine Ventileinheit enthält, die aus zwei übereinander liegenden Dichtungsplatten (12, 13) besteht, von denen eine fest und die andere durch einen Steuerhebel (15) bewegbar ist; der Steuerhebel ist auf einem Transversal-Schwingbolzen (16) angelenkt und kann auf einer drehbar in dieses Gehäuse montierten Lagerbuchse (17) rotieren, und die beiden Dichtungsplatten (fest und beweglich) haben Wassereinlauf- und Wasserauslauföfinungen, bei denen die bewegliche Platte (13) durch die Öffnungs- und Schließposition dieses Steuerhebels über eine auf diese beweglichen Platte aufgeschrumpfte Zugplatte (14) bewegt wird, und Mittel (20, 21), um die Schließbewegungen der beweglichen Platte mit diesem Steuerhebel (15) zu stoppen; sie sind auf einer orthogonalen Ebene zu den Schwingungsbewegungen des Hebels auf dem entsprechenden Querbolzen in die Zugplatte (14) montiert, die dadurch charakterisiert ist, dass in der Zugplatte (14) zwei Radialkammern (18, 19) vorgesehen sind, die diametral entgegengesetzt zu den beiden Sperrkolben (20, 21) liegen, die abgedichtet in diesen Kammern gleiten, die beide mit einem mit einem flüssigen Mittel gefüllten Kanal oder Zwischenbehälter (22) verbunden sind, diese Flüssigkeit geht von einer Kammer (19) der Zugplatte zur ändern (18), wenn das Ventil von der Schließposition in die Öffnungsposition geht.

2. Warm- und Kaltwasser-Mischventil gemäß Patentanspruch 1, in dem dieses flüssiger Träger Öl ist.

3. Warm- und Kaltwasser-Mischventil gemäß Patentanspruch 1, in dem diese Kolben (20, 21) mit Dichtungen (20', 21') ausgestattet sind.

4. Warm- und Kaltwasser-Mischventil gemäß Patentanspruch 1, in dem eine schwimmend gelagerte Scheibe (25) mit mindestens einem Drosselloch (26) in der Kammer (19) angebracht und in Richtung der Schließbewegung der beweglichen Platte (13) angeordnet ist.

5. Warm- und Kaltwasser-Mischventil gemäß Patentanspruch 1, in dem die genannten, mit Dichtungen (20', 21') ausgestatteten Kolben (20, 21) beide konstant an der Innenfläche des Gehäuses anliegen und in diesen Kammern so angeordnet sind, dass ein Kolben in seine Kammer zurückläuft, wenn der andere aus der Kammer herausragt, abhängig von den Öffnungs- und Schließbewegungen der beweglichen Platte auf der festen Platte. Das Drosselmittel zum Drosseln des Ölflusses von dieser Kammer zu diesem Behälter, um die Schließbewegung des Platte mit dem Steuerhebel zu stoppen, ist in der Kammer (19) des Kolbens (21) in der Richtung, in der die bewegliche Platte (13) zur Schließung versetzt ist, vorgesehen.

6. Warm- und Kaltwasser-Mischventil gemäß Patentanspruch 5, in dem dieses Drosselmittel ein Loch (26) ist, das in einer schwimmend gelagerten Scheibe (21) angebracht wurde, die in der Kammer (12) hinter dem Kolben (21) angebracht ist und mit dieser durch die Zwischenlagerung einer komprimierbaren Feder (27) verbunden ist.

7. Warm- und Kaltwasser-Mischventil gemäß Patentanspruch 5, in dem jeder der genannten Kolben (20, 21) zwei seitliche Führungsarme (23) hat, die sich erweitern und in Führungsrillen (24) laufen, die an den Seiten dieser Kammern (18, 19) vorgesehen sind.

## Revendications

1. Robinet mitigeur d'eau chaude et froide comprenant un corps (11) qui contient une unité de soupape composée de deux plaquettes d'étanchéité superposées (12,13), l'une fixe et l'autre mobile sur celle fixe au moyen d'un levier de commande (15) qui repose sur un pivot d'oscillation transversale (16) et en mesure de tourner sur une douille de support (17) montée pivotante dans le corps cité dans lequel ces plaquettes fixe et mobile ont des passages d'entrée et de sortie de l'eau, et où la plaquette mobile (13) est déplacée dans les positions d'ouverture et de fermeture avec ce levier de commande par un disque de traction (14) qui est emboîté sur cette même plaquette mobile, et des milieux (20,21) pour arrêter les déplacements de fermeture de la plaquette mobile au moyen de ce levier de commande (15) qui sont montés dans le disque de traction (14) dans un plan orthogonal aux mouvements d'oscillation du levier sur l'axe transversal correspondant, **caractérisé en ce que** dans le disque de traction (14) sont prévus deux chambres radiales (18,19), diamétralement opposées et deux pistons de blocage (20,21) étanches coulissant dans ces chambres, ces chambres communicant toutes les deux avec un canal ou un réservoir intermédiaire(22) rempli d'un véhicule fluide, ce fluide passant d'une chambre(19) à l'autre (18) du disque de traction quand le robinet passe de la position de fermeture à la position d'ouverture.

2. Robinet mitigeur d'eau chaude et froide selon la revendication 1, où le véhicule fluide susdit est de l'huile.

3. Robinet mitigeur d'eau chaude et froide selon la revendication 1, où les pistons susdits (20,21) sont munis de garnitures (20,21).

4. Robinet mitigeur d'eau chaude et froide selon la revendication 1, où un disque flottant (25) ayant au moins un trou d'étranglement (26) est inséré dans la chambre (19) placée dans la direction du mouvement de fermeture de la plaquette mobile (13).

5. Robinet mitigeur d'eau chaude et froide selon la revendication 1, où les pistons susdits (20,21) munis de garnitures (20,21), appuient constamment tous les deux contre la surface interne du corps et sont disposés dans les chambres susdites de façon à ce qu'un piston rentre dans sa propre chambre quand l'autre sort de sa chambre en dépendance des mouvements d'ouverture et de fermeture de la plaquette mobile (13) sur celle fixe, et où le milieu d'étranglement pour étrangler le flux d'huile de la chambre susdite au réservoir susdit pour arrêter le mouvement de fermeture et de la plaquette au moyen du levier de commande est prévu dans la chambre (19) du piston (21) dans la direction dans laquelle la plaquette mobile (13) est déplacée pour la fermeture.

6. Robinet mitigeur d'eau chaude et froide selon la revendication 5, où le milieu d'étranglement susdit consiste en un trou (26) taillé dans un disque flottant (25) placé dans la chambre (19) derrière le piston (21) et associé avec celui-ci ou l'interposition d'un ressort compressible (27).

7. Robinet mitigeur d'eau chaude et froide selon la revendication 5, où chacun des pistons susdits (20,21) a deux bras latéraux de guidage (23) qui s'étendent et coulissent dans des rainures de guidage (24) prévus sur les côtés des chambres susdites (18,19).
